# EUROPEAN PATENT APPLICATION

(11) **EP 1 622 242 A1**
(43) Date of publication of application: **01.02.2006**
(21) Application number: 04077157.8
(22) Date of filing: 27.07.2004
(51) Int. Cl.: H02K 5/24

(54) **Device for absorbing the vibration in electrical motors**

(71) Applicant: Faber S.p.A., 60044 Fabriano (Ancona) (IT)
(72) Inventor: Patarchi, Alberto, 00122 Ostia Lido (Rome) (IT)
(74) Representative: Coppo, Alessandro

(57) **Abstract**

Device for absorbing the vibrations transmitted by an electric motor (2) and transferable to a support (3) having a seat wherein said motor is housed, that presents at least three flexible hook-up means (4,5,6) which connect the electric motor (2) to said support (3), arranged in a manner to maintain the motor correctly balanced in said seat.

## Description

The present invention relates to a device for absorbing the vibrations of an electric motor.

In particular, the present invention concerns a device for absorbing the vibrations of an electric motor generated during the rotation of said motor, that are transferred to a support whereon the motor is fixed.

In technical state of the art, it is known that synchronous, asynchronous, universal, and "brushless" electric motors create very irritating noise, especially in motors with reduced electrical power, for example, those with a few dozen watts. For example, for applications for the control of air ventilation, especially in domestic kitchen hoods, the noise reverberates in the diffusion system that acts as a resonance box thus amplifying the noise even further. Furthermore, it is also known that the emitted noise is even greater when the motors are equipped with speed variation devices having phase choke control

Electric motors known for having a high torque ripple can transfer sudden mechanical energy peaks through the motor supports to the user equipment on which they are mounted, for example kitchen hoods, that is very irritating for hearing. To reduce the noise, various manufacturers have studied rubber absorbers of different types and thickness, as well as methods for lining the containers with fabric, sponge rubber and other materials.

The Applicant has noted that these systems do not resolve the noise and vibration problems, since they reduce the emitted noise frequency only to a small degree.

The Applicant has realised a shock absorber device that prevents the transfer of the vibrations that cause said noise frequency from an electric motor to the support of the user equipment with which the electric motor is operationally associated. For example, the absorber device according to the present invention connects an electric motor to a support of user equipment represented by a kitchen hood, in such a manner to prevent the transfer of vibrations from the motor to the hood, thus avoiding noise generation during the rotation of said motor. In this example, the motor is adapted to drive a traditional hood suction fan.

This is obtained by a device for absorbing the vibrations transmitted by a rotating electric motor, by attaching said motor to a support, with which it is operationally associated, exclusively by means of springs.

One aspect of the present invention relates to a device for absorbing the vibrations transmitted by an electric motor and transferable to a support having a seat wherein said motor is housed, characterised in that it comprises at least three flexible hook-up means to connect the electric motor to said support arranged in a manner to maintain the balance of said motor in said seat.

The characteristics and advantages of the device according to the present invention will be explained in more detail further on in the following description provided as an example, but by no means limitative, of an embodiment with reference to the appended figures wherein
Figure 1 is a principle diagram of an embodiment of a device for absorbing the vibrations generated by an electric motor according to the present invention;
Figure 2 is a principle diagram of a further embodiment of a device for absorbing the vibrations generated by an electric motor according to the present invention;
Figure 3 is a front view of the absorber device according to the embodiment shown in figure 1 applied to an electric motor by means of a hook-up element;
Figure 4 is a front view of the absorber device according to the embodiment shown in figure 1 applied to the tangs of the electric motor;
Figure 5 is a view in perspective of the absorber device applied to an electric motor equipped with three pairs of tangs according to the embodiment shown in figure 1;
Figure 6 is a view in perspective of the absorber device applied to an electric motor equipped with three pairs of tangs according to the embodiment shown in figure 1;
Figure 7 is a view in perspective of the absorber device applied to an electric motor equipped with three tangs according to the embodiment shown in figure 1;
Figure 8 is a view in perspective of the absorber device applied to an electric motor equipped with three tangs according to the embodiment shown in figure 1;
Figure 9 is a view in perspective of the absorber device applied to an electric motor equipped with the hook-up element as shown in figure 3.

In reference to the aforesaid figures, an electric motor 2, is illustrated operationally associated with a support 3, of the user equipment. In particular, said motor is housed in a seat 31 in said support.

An example of said user equipment is a kitchen hood, wherein the motor is used to drive a fume extraction/suction fan.

Said seat is represented in the appended figures in circular or cylindrical form, although the present invention can be applied in an equivalent manner to seats for electric motors having different forms, such as, for example, rectangular, square, hexagonal, octagonal, etc.

The device for absorbing the vibrations according to the present invention preferably comprises at least three flexible hook-up means to connect the electric motor to said support, arranged in a manner to maintain the motor correctly balanced in said seat.

Preferable each said flexible hook-up means comprise at least one spring being pre-set with a pre-established tension.

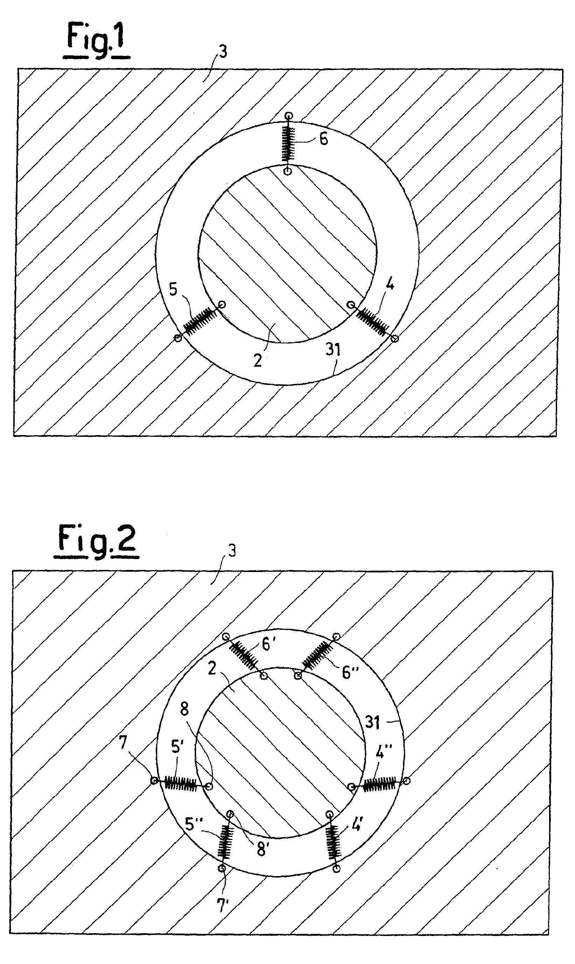

In figure 1, according to a first embodiment of the present invention, the electric motor 2 is housed in said circular shaped seat and is maintained in a central position within the seat by three flexible hook-up means, each one comprising a spring 4 or 5 or 6, arranged at an equal distance from each other ( at 120° from each other). Each spring is connected at one end to the electric motor 2, and the opposite end of the spring is connected to support 3, preferably on the rim of the circumference of said seat 31. In this manner, when the springs are in traction, they have exactly the correct force to support the applied weight of the motor .

In figure 2, according to a second embodiment of the present invention, the electric motor 2 is housed in said circular shaped seat 31 and is maintained in a central position within the seat by three flexible hook-up means arranged basically at an equal distance from each other . Each of the said flexible hook-up means comprises at least two springs 4' and 4" or 5' and 5", or 6' and 6", connected at one end to said motor 2, and at the opposite end connected to said support 3. In particular, according to said embodiment, the two springs are attached to the circumference of said seat 31 in points 7 and 7' , wherein the distance between them is greater than the distance between the two corresponding points 8 and 8' wherein said springs are attached to motor 2.

Also in this embodiment the springs in traction have the correct force to support the weight of the motor applied, and furthermore, the double spring configuration for each flexible hook-up means provides the absorption of the motor vibrations during both rotation directions: clockwise and counter-clockwise. This configuration is recommended for motors with power of a certain importance, where the greater number of springs provides a greater vibration absorption capacity.

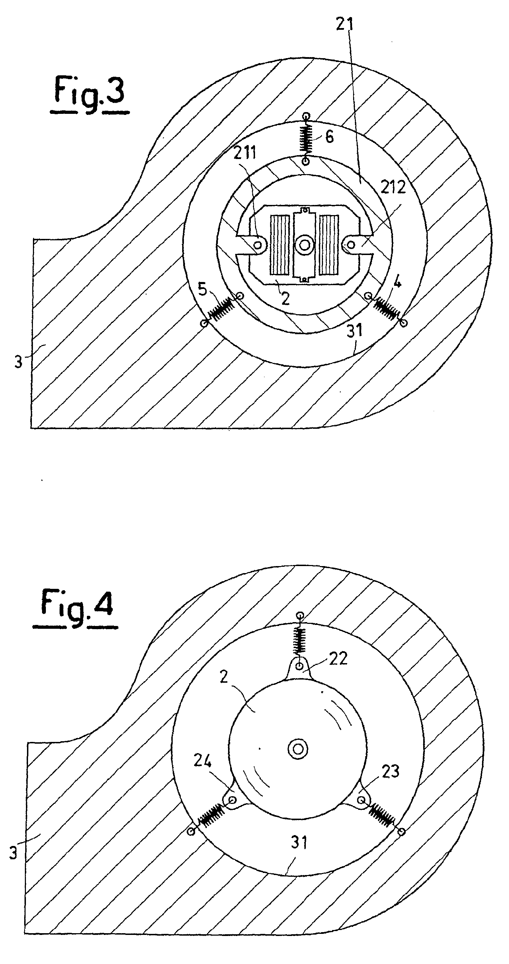

Figures 3 and 4 show the absorber device according to the present invention associated with electric motors by means of two different types of hook-up system. In particular, in figure 3 the electric motor is basically rectangular in shape and therefore the mounting of the motor in a basically circular seat is disadvantageous. For this purpose, according to the present invention, a fixing element 21 is foreseen, having a basically ring-shaped form that permits the ends of the springs to be attached to the element in a similar manner to that shown in the previous figures 1 and 2. In particular, the motor is attached to said fixed element 21 by means of at least two opposed tongues 211 and 212.

In figure 4 the motor is basically cylindrical and is mounted with at least three tangs 22, 23, and 24 to which the ends of the springs are attached. In this case no further hook-up elements are necessary.

Figure 5 shows an absorber device according to the present invention applied to an electric motor equipped with three pairs of opposite tangs 22' and 22", 23' and 23", 24' and 24".

Said device comprises three flexible hook-up means arranged at equal distances from each other (basically at 120° from one another) each one comprising a pair of springs 41 and 41', or 51 and 51', or 61 and 61'. Each spring is attached at one end to one of said motor tangs and each pair of springs is attached to the circumference of seat 31 in a single point.

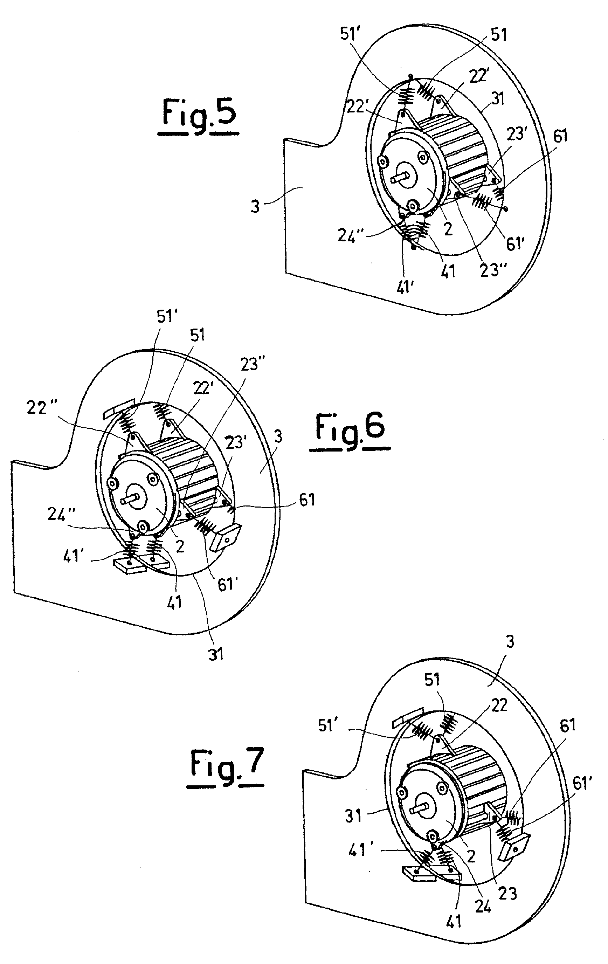

Figure 6 shows an absorber device according to the present invention applied to an electric motor equipped with three pairs of opposite tangs 22' and 22", 23' and 23", 24' and 24".

Said device comprises three flexible hook-up means arranged at equal distances from each other (basically at 120° from one another) each one comprising a pair of springs 41 and 41', or 51 and 51', or 61 and 61'. Each spring is attached at one end to one of said motor tangs and at the other end is attached to the circumference of seat 31.

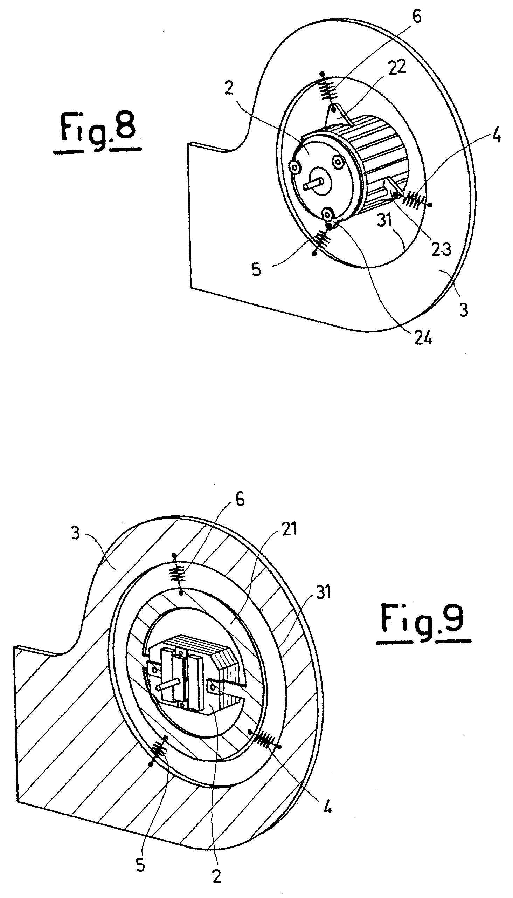

Figure 7 shows an absorber device according to the present invention applied to an electric motor equipped with three opposite tangs 22, 23, and 24.

Said device comprises three flexible hook-up means arranged at equal distances from each other (basically at 120° from one another) each one comprising a pair of springs 41 and 41', or 51 and 51', or 61 and 61'. Each pair of springs is attached at one end to one of said motor tangs and at the other end is attached to the circumference of seat 31.

Figure 8 shows an absorber device according to the present invention applied to an electric motor equipped with three opposite tangs 22, 23, and 24.

Said device comprises three flexible hook-up means arranged at equal distances from each other (basically at 120° from one another) each one comprising a spring 4 or 5 or 6. Each spring is attached at one end to one of said motor tangs and at the other end is attached to the circumference of seat 31.

Figure 9 shows an absorber device according to the present invention applied to an electric motor equipped with one hook-up element 21 as shown in figure 3.

Said device comprises three flexible hook-up means arranged at equal distances from each other (basically at 120° from one another) each one comprising a spring 4 or 5 or 6. Each spring is attached at one end to said ring-shaped element 21 and at the other end is attached to the circumference of seat 31.

In the context of the present invention the number of springs can be increased in cases where they are forced to support motors of heavier weight.

The device, object of the present invention also aims at absorbing/ reducing the mechanical energy if the user equipment should fall, preventing breaking, above all during handling and transport.

Furthermore, during electric motor start-up at full power, the absorber device prevents the sudden mechanical shock that can lead to cracking and breaking over a period of time provoking serious damage to user equipment.

## Claims

1. Device for absorbing the vibrations transmitted by an electric motor and transferable to a support having a seat wherein said motor is housed, **characterised in that** it comprises at least three flexible hook-up means that connect the electric motor to said support, arranged in a manner to maintain the motor correctly balanced in said seat.

2. Device according to claim 1, wherein said seat is basically circular in form.

3. Device according to claim 2 wherein said hook-up means are arranged basically at an equal distance from each other on the rim of said circular seat.

4. Device according to claim 3 wherein said flexible hook-up means each comprise at least one spring.

5. Device according to claim 3 wherein said flexible hook-up means each comprise at least one pair of springs.

6. Device according to claim 5 wherein said pair of springs is attached to the circumference of said seat in points where the distance from each other is greater than the distance between two corresponding fixing points of the same pair of springs attached to the motor.

7. Device according to claim 3 wherein said flexible hook-up means are attached to said motor by means of a ring-shaped hook-up element.

8. Device according to claim 3 wherein said flexible hook-up means are attached to said motor by means of tangs fixed to said motor.
